# EUROPÄISCHE PATENTSCHRIFT

(11) **EP 2 855 173 B1**
(45) Veröffentlichungstag und Bekanntmachung des Hinweises auf die Patenterteilung: **10.07.2019**
(21) Anmeldenummer: 13726446.1
(22) Anmeldetag: 21.05.2013
(51) Int. Cl.: B60C 13/00

(54) **POLYMERPRODUKT, VORZUGSWEISE FAHRZEUGREIFEN**
PRODUCT MADE OF POLYMER, PREFERABLY VEHICLE TIRE
PRODUIT EN BASE DE POLYMER, EN PRÉFÉRENCE PNEU DE VEHICULE

(30) Priorität: 05.06.2012 DE 102012104890
(43) Veröffentlichungstag der Anmeldung: 08.04.2015
(73) Patentinhaber: Continental Reifen Deutschland GmbH, 30165 Hannover (DE)
(72) Erfinder: METZ, Markus, 31535 Neustadt (DE)
(74) Vertreter: Finger, Karsten
(86) Internationale Anmeldenummer: PCT/EP2013/060350
(87) Internationale Veröffentlichungsnummer: WO 2013/182412

(56) Entgegenhaltungen:
- EP-A2- 1 260 387
- EP-A2- 1 310 384
- US-A1- 2010 258 231

## Beschreibung

Die Erfindung betrifft ein Polymerprodukt, vorzugsweise Fahrzeugreifen, mit einer äußeren Oberfläche, auf der zumindest eine Darstellung angeordnet ist, wobei diese Darstellung wenigstens zwei benachbart nebeneinander angeordnete Schraffuren aus parallel zueinander angeordneten Rippen und zwischen diesen Rippen angeordneten Aussparungen aufweist und wobei diese wenigstens zwei Schraffuren in unterschiedlichen Richtungen orientiert sind.

Polymerprodukte sind beispielsweise Kfz-Interieurteile wie Tür- und Seitenverkleidungen, wie Konsolenverkleidungen sowie Fahrzeugreifen. KFZ-Interieurteile weisen Werkstoffe wie PVC, PU, TPO auf.

Als ein derartiges Polymerprodukt ist beispielsweise ein Fahrzeugreifen aus der US 2004/0187997 A1 bekannt geworden. Auf der Oberfläche der Seitenwand des Fahrzeugreifens, ist eine Darstellung angeordnet, welche eine Struktur in Form eines Lichtbeugungsgitters aus Mikrofurchen bestimmter Anordnung aufweist. Durch den Effekt der Lichtbeugung am Lichtbeugungsgitter ist zumindest eine andere Farbe als das Schwarz des Elastomers oder Kautschuks, aus dem die Seitenwand besteht, für das menschliche Auge zu sehen. Die Darstellung kann auch mehrere Strukturen in Form von Lichtbeugungsgittern aus Mikrofurchen aufweisen, wobei die mehreren Strukturen in unterschiedlichen Winkeln zueinander angeordnet sind.

Aus der US 2010/258231 A1 ist eine Darstellung auf der äußeren Oberfläche der Reifenseitenwand bekannt, welche zwei Schraffuren aufweist, welche sich in ihrer Dichte und Höhe voneinander unterscheiden.

Aus der EP 1 310 384 A2 ist eine Darstellung auf der äußeren Oberfläche der Reifenseitenwand bekannt, welche eine diskontinuierliche Schraffur mit einer Darstellung aufweist.

Der Begriff "Darstellung" umfasst dabei Abbildungen, Firmennamen, Firmenlogos, Farbkennzeichnungen, Informationsdaten, Identifikationscodes, Schraffuren etc.. Darstellungen auf äußeren Oberflächen von Polymerprodukten sollen eine hohe Fertigungsqualität aufweisen, eine hohe Qualitätsanmutung des Polymerproduktes erzeugen sowie diesen gegenüber anderen Polymerprodukten optisch hervorheben. Dieses wird z.B. durch das Aufbringen von (farbigen) Folien auf Seitenwänden von Fahrzeugreifen erreicht. Die Folien werden üblicherweise auch "Vulkanetten" genannt. Das Aufbringen von diesen Folien ist jedoch aufwändig und teuer.

Daher ist man bestrebt, die Darstellungen im üblichen Herstellungsprozess kostengünstig ohne gesonderte Arbeitsschritte fertigen zu können.

Im Hinblick auf den nächstliegenden Stand der Technik ist es die Aufgabe der Erfindung, ein kostengünstiges Polymerprodukt zur Verfügung zu stellen, das auf seiner äußeren Oberfläche eine Darstellung aufweist, die dem Polymerprodukt eine hochqualitative Anmutung und eine hohe Fertigungsqualität verleiht und zudem optische Mängel an der äußeren Oberfläche - wie beispielsweise Seitenwandeinschnürungen bei Fahrzeugreifen - kaschiert.

Gelöst wird die Aufgabe, indem die Rippen der wenigstens zwei Schraffuren gleichartig sind und indem die Aussparungen in einem Überlappungsbereich, welcher wenigstens Teilbereiche von zwei benachbart nebeneinander angrenzend angeordneten und in unterschiedlichen Richtungen orientierten Schraffuren umfasst, zur Erzeugung eines Wechselbild-Effektes eine definierte andere Tiefe als die Aussparungen außerhalb dieses Überlappungsbereiches aufweisen.

Es ist erfindungsgemäß ein Polymerprodukt geschaffen, das als Darstellung auf seiner äußeren Oberfläche eine Art des sog. Wechselbild-Effektes aufweist. Hierdurch ist dem Polymerprodukt in kostengünstiger Weise eine hochqualitative Anmutung und eine hohe Fertigungsqualität verliehen. Zudem werden durch diese Darstellung z.B. konstruktionsbedingte, unerwünschte Unebenheiten auf einer Seitenwand eines Reifens kaschiert.

Die Darstellung wird beispielsweise bei einem Fahrzeugreifen durch eine entsprechend ausgestaltete Formfläche der Vulkanisierform während der Reifenvulkanisation formgebend in bzw. auf die Seitenwand des Reifenrohlings geprägt. Es ist keine gesonderte Folie, kein gesondertes Reifenseitenwandmaterial und kein weiterer Arbeitsschritt notwendig. Die Seitenwand des Fahrzeugreifens besteht aus üblicher Seitenwandkautschukmischung.

Es hat sich gezeigt, dass die Kombination von zwei oder mehr gleichartigen, einander benachbarten Schraffuren, welche in unterschiedlichen Winkeln zueinander orientiert sind, unterschiedliche Helligkeiten hervorrufen. Gleichartig bedeutet, dass die Rippen und die zwischen den Rippen angeordneten Aussparungen - bis auf deren Orientierung - gleich gestaltet sind. Wechselt der Winkel der Lichteinstrahlung, wechselt die Helligkeit. Erfindungsgemäß weisen die Aussparungen in einem Überlappungsbereich, welcher zwei benachbarte Schraffuren mit unterschiedlichem Schraffurwinkeln beinhaltet, eine andere Tiefe auf, als die an diesen Bereich anschließenden Aussparungen. Die unterschiedlich tief gestalteten Aussparungen führen zu unterschiedlichen Helligkeiten. Derart ist ein sog. Wechselbild-Effekt geschaffen, wobei die Wechselbilder aufgrund des Überlappungsbereiches "sanft" ineinander übergehen.

Die weniger tiefen Aussparungen erscheinen dem Betrachter heller als die tieferen Aussparungen. Ist die Aussparung tief, erscheint diese schwarz. Wäre die Aussparung komplett ausgefüllt, erschiene diese quasi weiß. Variiert nun der Winkel des Lichteinfalls auf die Darstellung, kommt es zu einem sogenannten Wechselbild-Effekt aus dunklen und helleren Elementen.

Vorteilhaft ist es, wenn die Aussparungen in einem anderen, außerhalb des Überlappungsbereiches liegenden Bereich innerhalb einer Schraffur eine andere Tiefe aufweist, als andere Aussparungen innerhalb dieser Schraffur. Hierdurch ist zusätzlich in diesem anderen Bereich eine andere Helligkeitsstufe geschaffen, die den Effekt des Wechselbild-Effektes bei unterschiedlichem Lichteinfall verstärkt.

Vorteilhaft ist es, wenn die Rippen der Schraffur - im Querschnitt betrachtet - die Form von in etwa gleichseitigen oder gleichschenkligen Dreiecken aufweisen, wobei die Basis der Dreiecke parallel zur äußeren Oberfläche der Seitenwand ausgerichtet ist und sich die Eckpunkte zweier benachbarter Dreiecke berühren. Hierdurch ist eine Schraffur geschaffen, die besonders für den Wechselbild-Effekt geeignet ist.

Es ist zweckmäßig, wenn alle Rippen die gleiche Höhe von 0,1 mm bis 3,0 mm, vorzugsweise von 0,25 mm bis 1,0 mm aufweisen, so dass die radial äußeren Oberflächen der Rippen in einer Ebene liegen.

Es ist ebenfalls zweckmäßig, wenn benachbarte Rippen eine Beabstandung von 0,1 mm bis 3,0 mm, vorzugsweise von 0,25 mm bis 1,0 mm aufweisen.

Vorteilhaft ist es, wenn zwei Schraffuren angeordnet sind, deren Rippen in einem Winkel von 90° zueinander ausgerichtet sind.

Zweckmäßig ist es, wenn die Aussparungen unterschiedlicher Tiefe allesamt in etwa die gleiche unterschiedliche Tiefe aufweisen. Hierdurch ist eine zweite Ebene geschaffen, welche bei dem Betrachter eine einzige bestimmte Helligkeitsstufe erzeugt und somit den Flip-Flop-Effekt klar heraustreten lässt.

Vorteilhaft ist es, wenn die Aussparungen mit der geringeren Tiefe - im Querschnitt betrachtet - die Form eines Plateaus bzw. einer Ebene aufweisen. Hierdurch sind die Effekte durch unterschiedlichen Lichteinfall sehr deutlich ausgebildet.

Weitere Merkmale, Vorteile und Einzelheiten der Erfindung werden anhand der Zeichnungen, die ein schematisches Ausführungsbeispiel darstellen, näher beschrieben. Dabei zeigt die
Fig. 1 eine hälftige Ansicht eines Fahrzeugreifens mit einer Wechselbild-Darstellung auf der Seitenwand;
Fig.2a - 2c ein Rennflaggenmotiv einer Reifenseitenwand, welches bei unterschiedlichem Lichteinfall (Fig. 2b und Fig. 2c) ein Wechselbild darstellt;
Fig.3 eine Prinzipdarstellung des Wechselbildeffektes mit jeweiligen Schnittdarstellungen A-A bis C-C, wobei die Fig. 3a extrahiert nur die Schraffur zeigt, die Fig. 3b extrahiert nur die Ausfüllung der Aussparungen zeigt und Fig. 3c die Kombination aus Schraffur und Ausfüllung der Aussparungen zur Erzeugung des Wechselbildeffektes.

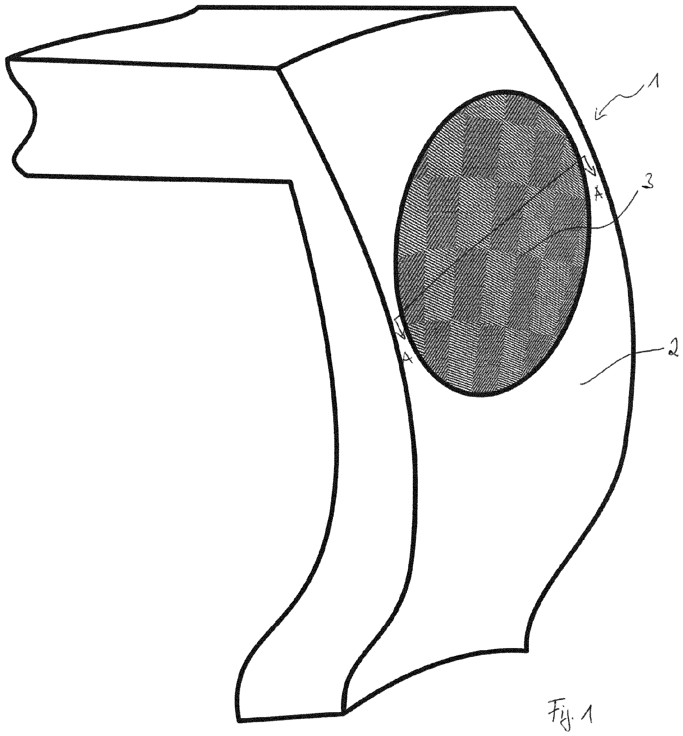

Die **Fig. 1** zeigt eine hälftige Ansicht eines Fahrzeugreifens 1 mit einer Seitenwand 2, wobei die Seitenwand 2 eine Darstellung 3 mit Wechselbild-Effekt aufweist.

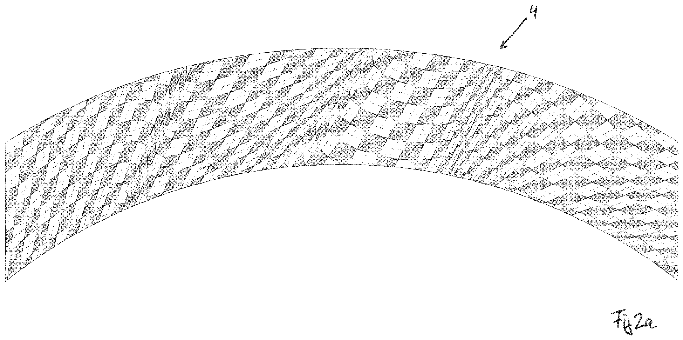

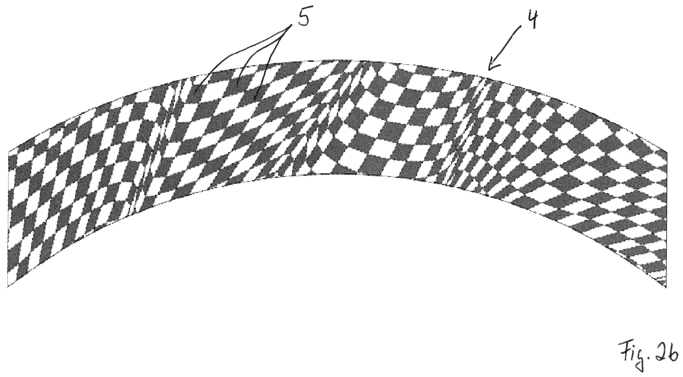

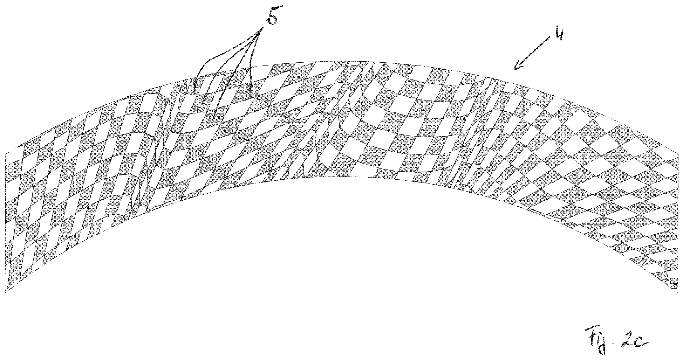

Die **Fig. 2a** zeigt ein Rennflaggenmotiv 4 einer Reifenseitenwand, welches bei unterschiedlichem Lichteinfall (**Fig. 2b** und **Fig. 2c**) ein Wechselbild erzeugt. Die Kästchen 5 des Rennflaggenmotives 4 scheinen unter unterschiedlichem Lichteinfall zu "wandern".

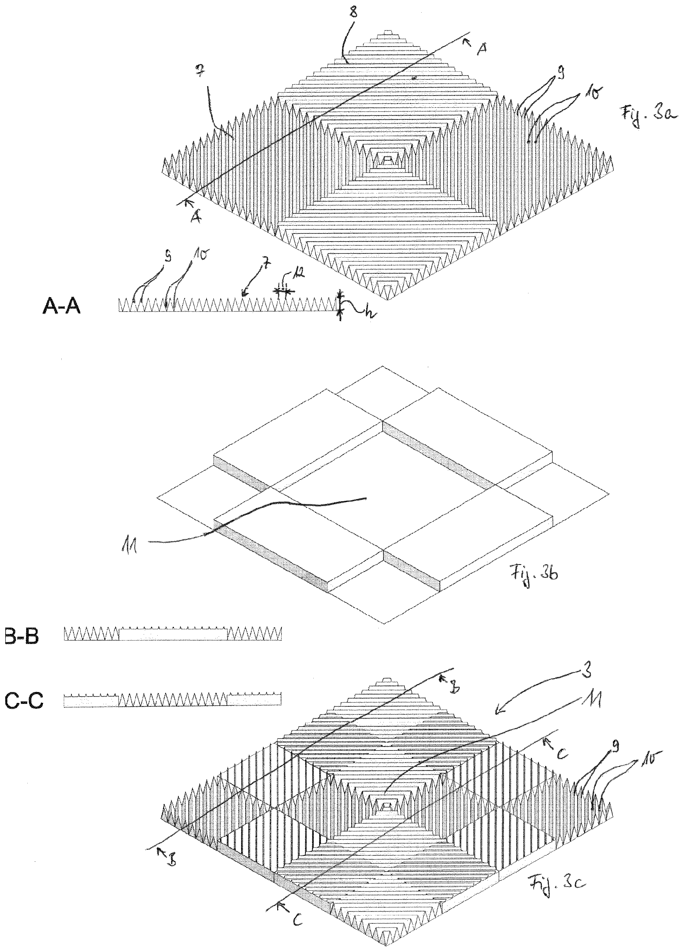

Die **Fig.3** zeigt eine Prinzipdarstellung des Wechselbildeffektes mit jeweiligen Schnittdarstellungen A-A bis D-D, wobei die Fig. 3a extrahiert nur die Schraffur zeigt, die Fig. 3b extrahiert nur die Ausfüllung der Aussparungen zeigt und Fig. 3c die Kombination aus Schraffur und Ausfüllung der Aussparungen, welche zur Erzeugung des Wechselbildeffektes führt.

Die Darstellung 3 weist wenigstens zwei benachbart nebeneinander angeordnete Schraffuren 7, 8 aus parallel zueinander angeordneten Rippen 9 und zwischen diesen Rippen 9 angeordneten Aussparungen 10 auf, vergl. Fig. 3a und die Schnittdarstellung A - A. Diese wenigstens zwei Schraffuren 7, 8 sind in unterschiedlichen Richtungen, hier 90° zueinander, orientiert.

Die Rippen 9 der Schraffur 7 weisen - in der Schnittdarstellung betrachtet - die Form von in etwa gleichschenkligen Dreiecken auf, wobei die Basis der Dreiecke parallel zur äußeren Oberfläche des Polymerproduktes ausgerichtet ist und sich die Eckpunkte zweier benachbarter Dreiecke berühren. Alle Rippen 9 weisen die gleiche Höhe h von 1,0 mm auf. Die Beabstandung 12 benachbarter Rippen 9 beträgt 1,0 mm.

Weiterhin weisen die Aussparungen 10 in einem Überlappungsbereich 11, welcher Teilbereiche von wenigstens zwei benachbart nebeneinander angrenzend angeordneten und in unterschiedlichen Richtungen orientierten Schraffuren 7, 8 umfasst, zur Erzeugung eines Wechselbild-Effektes eine definierte andere Tiefe als die Aussparungen außerhalb dieses Überlappungsbereiches auf. Durch die unterschiedlich tiefen Aussparungen 10, welche durch Auffüllung der Aussparung 10 erzeugt sind, werden unterschiedliche Helligkeiten erzeugt. Die weniger tiefen Aussparungen 10 erscheinen dem Betrachter heller als die tieferen Aussparungen 10. Ist die Aussparung 10 tief, erscheint diese schwarz. Wäre die Aussparung komplett ausgefüllt, erschiene diese quasi weiß, vergl. Fig. 3b und die Schnittdarstellungen B - B, C - C.

Die Kombination der Darstellung 4 aus wenigstens zwei unterschiedlich zueinander orientierten Schraffuren 7, 8, bestehend aus Rippen 9 und Aussparungen 10 sowie Überlappungsbereichen 11, in denen die Aussparungen eine andere Ausfüllung als außerhalb des Überlappungsbereiches 11 aufweisen, führen bei unterschiedlichem Lichteinfall zu einem Wechselbildeffekt.

### Bezugszeichenliste

### (Teil der Beschreibung)

- 1: Fahrzeugreifen
- 2: Seitenwand
- 3: Darstellung
- 4: Rennflaggenmotiv
- 5: Kästchen des Rennflaggenmotivs
- 7: Schraffur
- 8: Schraffur
- 9: Rippe
- 10: Aussparung
- 11: Überlappungsbereich
- 12: Beabstandung zweier benachbarter Rippen
- 13: Auffüllung

- h: Höhe der Rippe

## Patentansprüche

1. Polymerprodukt (1), vorzugsweise Fahrzeugreifen, mit einer äußeren Oberfläche (2), auf der zumindest eine Darstellung (3) angeordnet ist, wobei diese Darstellung (3) wenigstens zwei benachbart nebeneinander angeordnete Schraffuren (7, 8) aus parallel zueinander angeordneten Rippen (9) und zwischen diesen Rippen (9) angeordneten Aussparungen (10) aufweist und wobei diese wenigstens zwei Schraffuren (7, 8) in unterschiedlichen Richtungen orientiert sind, **dadurch gekennzeichnet, dass** die Rippen (9) der wenigstens zwei Schraffuren (7, 8) gleichartig sind, dass die Aussparungen (10) in einem Überlappungsbereich (11), welcher wenigstens Teilbereiche von zwei benachbart nebeneinander angrenzend angeordneten und in unterschiedlichen Richtungen orientierten Schraffuren (7, 8) umfasst, zur Erzeugung eines Wechselbild-Effektes eine definierte andere Tiefe (t) als die Aussparungen (10) außerhalb dieses Überlappungsbereiches (11) aufweisen.

2. Polymerprodukt (1) nach Anspruch 1, **dadurch gekennzeichnet, dass**.die Aussparungen (10) in einem anderen, außerhalb des Überlappungsbereiches (11) liegenden Bereich innerhalb einer Schraffur (7, 8) eine andere Tiefe (t) aufweist, als andere Aussparungen (10) innerhalb dieser Schraffur (7, 8).

3. Polymerprodukt (1) nach einem oder mehreren der vorangehenden Ansprüche, **dadurch gekennzeichnet, dass** die Rippen (9) der Schraffur (7, 8) - im Querschnitt betrachtet - die Form von in etwa gleichseitigen oder gleichschenkligen Dreiecken aufweisen, wobei die Basis der Dreiecke parallel zur äußeren Oberfläche des Polymerproduktes ausgerichtet ist und sich die Eckpunkte zweier benachbarter Dreiecke berühren.

4. Polymerprodukt (1) nach Anspruch 2, **dadurch gekennzeichnet, dass** alle Rippen (9) die gleiche Höhe (h) von 0,1 mm bis 3,0 mm, vorzugsweise von 0,25 mm bis 1,0 mm aufweisen.

5. Polymerprodukt (1) nach Anspruch 2 oder 3, **dadurch gekennzeichnet, dass** benachbarte Rippen (9) eine Beabstandung (12) von 0,1 mm bis 3,0 mm, vorzugsweise von 0,25 mm bis 1,0 mm aufweisen.

6. Polymerprodukt (1) nach einem oder mehreren der vorangehenden Ansprüche, **dadurch gekennzeichnet, dass** zwei Schraffuren (7, 8) angeordnet sind, deren Rippen in einem Winkel von 90° zueinander ausgerichtet sind.

7. Polymerprodukt (1) nach einem oder mehreren der vorangehenden Ansprüche, **dadurch gekennzeichnet, dass** die Aussparungen (9) des Überlappungsbereiches in etwa die gleiche andere Tiefe aufweisen und dass die Aussparungen außerhalb des Überlappungsbereiches eine andere gleiche Tiefe aufweisen.

8. Polymerprodukt (1) nach einem oder mehreren vorangehenden Ansprüchen, **dadurch gekennzeichnet, dass** dieses ein Interieurteil eines Kraftfahrzeuges oder ein Fahrzeugreifen ist, welcher die Darstellung auf zumindest einer Seitenwand aufweist.

## Claims

1. Polymer product (1), preferably a vehicle tyre, having an outer surface (2), on which at least one design (3) is arranged, wherein this design (3) has at least two hatching areas (7, 8) arranged neighbouring alongside one another, comprising ribs (9) arranged parallel to one another and recesses (10) arranged between these ribs (9), and wherein these at least two hatching areas (7, 8) are oriented in different directions, **characterized in that** the ribs (9) of the at least two hatching areas (7, 8) are identical, **in that** the recesses (10) in an overlapping region (11), which comprises at least sub-regions of two hatching areas (7, 8) that are arranged adjacently neighbouring alongside one another and oriented in different directions, have a defined depth (t) different from the depth of the recesses (10) outside this overlapping region (11) in order to produce a changing-image effect.

2. Polymer product (1) according to Claim 1, **characterized in that** the recesses (10) in another region within a hatching area (7, 8) that lies outside the overlapping region (11) have a different depth (t) than other recesses (10) within this hatching area (7, 8).

3. Polymer product (1) according to one or more of the preceding claims, **characterized in that**, when seen in cross section, the ribs (9) of the hatching area (7, 8) have the form of approximately equilateral or isosceles triangles, wherein the base of the triangles is aligned parallel to the outer surface of the polymer product and the corner points of two neighbouring triangles touch.

4. Polymer product (1) according to Claim 2, **characterized in that** all of the ribs (9) have the same height (h) of 0.1 mm to 3.0 mm, preferably of 0.25 mm to 1.0 mm.

5. Polymer product (1) according to Claim 2 or 3, **characterized in that** neighbouring ribs (9) have a spacing (12) of 0.1 mm to 3.0 mm, preferably of 0.25 mm to 1.0 mm.

6. Polymer product (1) according to one or more of the preceding claims, **characterized in that** two hatching areas (7, 8), the ribs of which are aligned at an angle of 90° in relation to one another, are arranged.

7. Polymer product (1) according to one or more of the preceding claims, **characterized in that** the recesses (9) of the overlapping region have approximately the same different depth and **in that** the recesses outside the overlapping region have a different same depth.

8. Polymer product (1) according to one or more of the preceding claims, **characterized in that** it is an interior part of a motor vehicle or a vehicle tyre, which has the design on at least one side wall.

## Revendications

1. Produit polymère (1), de préférence des pneumatiques de véhicule, comprenant une surface extérieure (2) sur laquelle est disposée au moins une représentation (3), cette représentation (3) comportant au moins deux hachures (7, 8) disposées de manière adjacente et constituées de nervures (9) disposées parallèlement les unes aux autres et d'évidements (10) ménagés entre ces nervures (9) et ces au moins deux hachures (7, 8) étant orientées dans des directions différentes, **caractérisé en ce que** les nervures (9) des au moins deux hachures (7, 8) sont similaires, **en ce que** les évidements (10) situés dans une région de chevauchement (11), qui comporte au moins des sous-régions de deux hachures (7, 8) disposées de manière adjacente et orientées dans des directions différentes, ont une profondeur définie (t) différente de celle des évidements (10) à l'extérieur de cette région de chevauchement (11) de manière à générer un effet d'image changeant.

2. Produit polymère (1) selon la revendication 1, **caractérisé en ce que** les évidements (10), situés dans une autre région se trouvant à l'extérieur de la région de chevauchement (11), ont à l'intérieur d'une rainure (7, 8), une autre profondeur (t) que celle des évidements (10) situés à l'intérieur de cette hachure (7, 8).

3. Produit polymère (1) selon l'une au moins des revendications précédentes, **caractérisé en ce que** les nervures (9) des hachures (7, 8), vues en coupe transversale, ont la forme de triangles approximativement équilatéraux ou isocèles, la base des triangles étant orientée parallèlement à la surface extérieure du produit polymère et venant en contact avec les sommets de deux triangles adjacents.

4. Produit polymère (1) selon la revendication 2, **caractérisé en ce que** toutes les nervures (9) ont la même hauteur (h) de 0,1 mm à 3,0 mm, de préférence de 0,25 mm à 1,0 mm.

5. Produit polymère (1) selon la revendication 2 ou 3, **caractérisé en ce que** les nervures adjacentes (9) ont un écartement (12) de 0,1 mm à 3,0 mm, de préférence de 0,25 mm à 1,0 mm.

6. Produit polymère (1) selon l'une au moins des revendications précédentes, **caractérisé en ce que** deux hachures (7, 8) sont prévues dont les nervures sont orientées selon un angle de 90° l'une par rapport à l'autre.

7. Produit polymère (1) selon l'une au moins des revendications précédentes, **caractérisé en ce que** les évidements (9) de la région de chevauchement ont à peu près la même autre profondeur et **en ce que** les évidements situés à l'extérieur de la région de chevauchement ont une profondeur différente.

8. Produit polymère (1) selon l'une au moins des revendications précédentes, **caractérisé en ce que** celui-ci est un élément intérieur d'un véhicule automobile ou un pneumatique de véhicule qui comporte la représentation sur au moins une paroi latérale.
